# EUROPEAN PATENT APPLICATION

(11) **EP 4 708 771 A1**
(43) Date of publication of application: **11.03.2026**
(21) Application number: 25188359.1
(22) Date of filing: 09.07.2025
(51) Int. Cl.: H04L 9/40, C09J 5/00, H04W 12/06, B32B 38/10

(54) **DEBONDING APPARATUS, DEBONDING SYSTEM, AND DEBONDING METHOD**

(30) Priority: 25.07.2024 JP 2024120396
(71) Applicant: Yokogawa Electric Corporation, Tokyo 180-8750 (JP)
(72) Inventor: OKADA, Syuhei, Musashino-shi, Tokyo, 180-8750 (JP)
(74) Representative: Stöckeler, Ferdinand

(57) **Abstract**

A debonding apparatus (20) includes a debonder (26) and a controller (21) that are located inside an object including multiple adhered members (51, 52) adhered by an adhesive member (53). The debonder (26) is configured to be operatable to debond the adhesive member (53) by acting on the adhesive member (53). The controller (21) is configured to activate the debonder (26), based on a debonding instruction received from a terminal apparatus (10) located outside the object.

## Description

### TECHNICAL FIELD

The present disclosure relates to a debonding apparatus, a debonding system, and a debonding method.

### BACKGROUND

A method of disassembling a disassemblable adhesive member that has been made thermally fusible or thermally decomposable, by heating the adhesive member using electromagnetic induction or microwaves is conventionally known (see, for example, Non-patent Literature (NPL) 1).

### CITATION LIST

### Non-patent Literature

NPL 1: Kurashiki Tetsuo, "Current Status of Adhesive Joints Considering Disassembly and Application to FRP Adhesive Joints," Journal of the Adhesive Society of Japan, Vol. 54, No. 11 (2018), pp. 397-401

### SUMMARY

When an adhesive member is disassembled or separated by heating, it is necessary to heat an entire object to be disassembled in order to heat the adhesive member inside the object to be disassembled. In this case, energy used to heat parts other than the adhesive member is wasted, and heating may also cause adverse effects such as deterioration of the parts other than the adhesive member. It is required to debond the adhesive member with high efficiency.

Considering the above-described points, the present disclosure aims to provide a debonding apparatus, a debonding system, and a debonding method that can debond an adhesive member with high efficiency.
(1) A debonding apparatus according to some embodiments includes at least one debonder and a controller that are located inside an object including multiple adhered members adhered by an adhesive member. The debonder is configured to be operatable to debond the adhesive member by acting on the adhesive member. The controller is configured to activate the debonder, based on a debonding instruction received from a terminal apparatus located outside the object.
(2) In the debonding apparatus according to (1) above, the debonder may include a container containing a solvent that can dissolve the adhesive member, and an actuator configured to cause the solvent to be released from the container.
(3) In the debonding apparatus according to (1) or (2) above, the debonder may include a heat source configured to apply heat to the adhesive member.
(4) In the debonding apparatus according to any one of (1) to (3) above, the debonder may include a light source configured to apply light to the adhesive member.
   The debonding apparatus inside the object causes the solvent, heat, or light to act on the adhesive member by the debonder, so the adhesive member is debonded with high efficiency, and the object is disassembled with high efficiency.
(5) In the debonding apparatus according to any one of (1) to (4) above, the controller may be configured to receive authentication information from the terminal apparatus, and enable the debonder to be activated upon succeeding in authentication using the authentication information.
(6) The debonding apparatus according to (5) above may include a memory. The controller may be configured to determine that the authentication using the authentication information is successful when information stored in advance in the memory matches with the authentication information.
   By activating the debonder when the debonding apparatus has been successfully authorized, it is possible to avoid a situation in which the object is unintentionally disassembled. For example, unauthorized disassembly by a malicious third party can be prevented. As a result, security regarding disassembly is improved.
(7) The debonding apparatus according to any one of (1) to (6) above may be separated into a master unit including the controller, and at least one slave unit including the debonder.
   By separating the debonding apparatus into the master unit and the slave unit, the debonding apparatus can be arranged in various configurations. As a result, the convenience of a debonding system is improved.
(8) A debonding system according to some embodiments includes at least one debonding apparatus, and a terminal apparatus configured to wirelessly power the at least one bonding apparatus and transmit a debonding instruction to the at least one debonding apparatus. The debonding apparatus includes at least one debonder and a controller that are located inside an object including multiple adhered members adhered by an adhesive member. The debonder is configured to be operatable to debond the adhesive member by acting on the adhesive member. The controller is configured to activate the debonder, based on the debonding instruction received wirelessly from the terminal apparatus located outside the object.
(9) In the debonding system according to (8) above, the terminal apparatus may be configured to transmit authentication information to multiple debonding apparatuses. The controller may be configured to enable the debonder to be activated upon succeeding in authentication using the authentication information. The authentication information may be information that enables only part of the multiple debonding apparatuses to be successfully authenticated.
(10) A debonding method according to some embodiments includes activating a debonder, which is located inside an object including multiple adhered members adhered by an adhesive member and is configured to be operatable to debond the adhesive member by acting on the adhesive member, based on a debonding instruction received from a terminal apparatus, which is located outside the object.
(11) In the debonding method according to (10) above, the activating the debonder may include receiving authentication information from the terminal apparatus, and enabling the debonder to be activated upon succeeding in authentication using the authentication information.

According to the present disclosure, it is possible to provide a debonding apparatus, a debonding system, and a debonding method that can debond an adhesive member with high efficiency.

### BRIEF DESCRIPTION OF THE DRAWINGS

In the accompanying drawings:
FIG. 1A is a schematic diagram illustrating a debonding method by heating according to a comparative example;
FIG. 1B is a schematic diagram illustrating a debonding method by a solvent according to a comparative example;
FIG. 2 is a block diagram illustrating an example of a configuration of a debonding system according to the present disclosure;
FIG. 3 is a schematic diagram illustrating an example of an arrangement of the debonding system according to the present disclosure;
FIG. 4 is a flowchart illustrating an example of a procedure of a debonding method according to the present disclosure;
FIG. 5 is a block diagram illustrating an example of a configuration in which a debonding apparatus is separated into a master unit and slave units; and
FIG. 6 is a schematic diagram illustrating an example of an arrangement of the master unit and the slave units of the debonding apparatus.

### DETAILED DESCRIPTION

### (Comparative Examples)

In order to disassemble a member adhered with an adhesive member, it is necessary to debond the adhesive member.

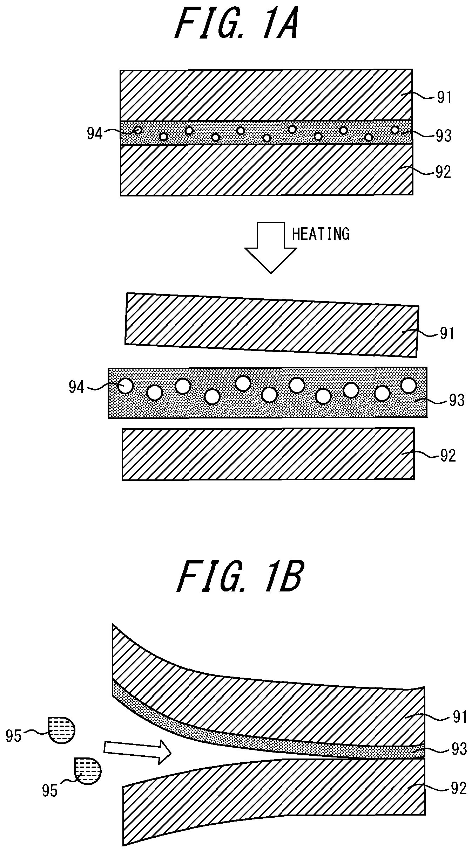

When the adhesive member is made of a material that softens by heating, or when the adhesive member contains a heat expansion material, such as microcapsules or a foaming agent, that expands by heating, the member to be disassembled may be disassembled by debonding the adhesive member by heating the member to be disassembled. As a first comparative example, as illustrated in FIG. 1A, it is assumed that a member in which an adhered member 91 and an adhered member 92 are adhered by an adhesive member 93 containing microcapsules 94 that expand by heating is disassembled. In this case, heating the member to be disassembled causes the microcapsules 94 to expand. The expansion of the microcapsules 94 causes the layer of the adhesive member 93 to expand and be debonded from the adhered members 91 and 92, thereby disassembling the member to be disassembled, which includes the adhered members 91 and 92.

However, when the entire member to be disassembled is heated in order to heat the adhesive member 93, the larger the member to be disassembled, the greater the amount of wasted heat energy.

When the adhesive member is made of a material that dissolves in a solvent, it is conceivable to apply the solvent to the adhesive member to debond the adhesive member and to disassemble the member to be disassembled. As a second comparative example, as illustrated in FIG. 1B, applying a solvent 95 to the layer of the adhesive member 93 between the adhered member 91 and the adhered member 92 causes the adhesive member 93 to be debonded, thereby disassembling the adhered member 91 and the adhered member 92.

However, when the member is configured to be able to be disassembled by debonding the adhesive member 93 by the solvent, it is necessary to apply the solvent to an end of the adhesive member 93 and gradually dissolve the adhesive member 93, which takes time. In addition, the amount of wasted solvent increases.

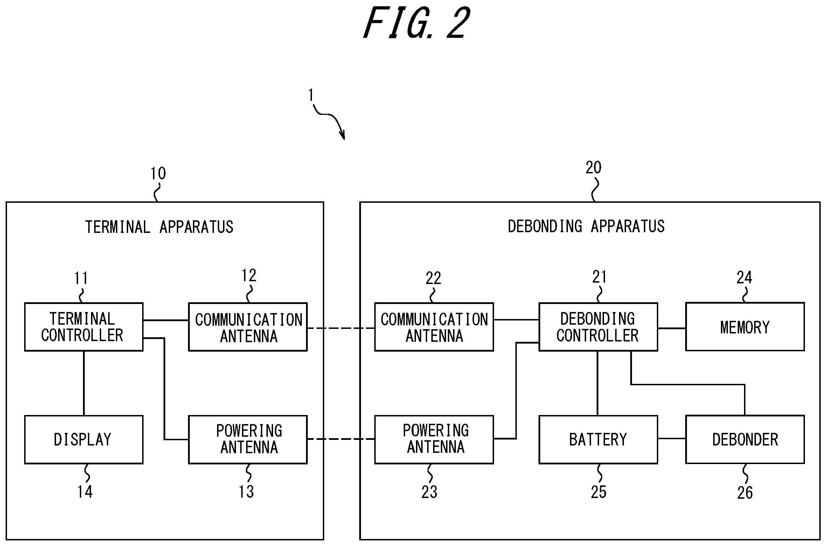

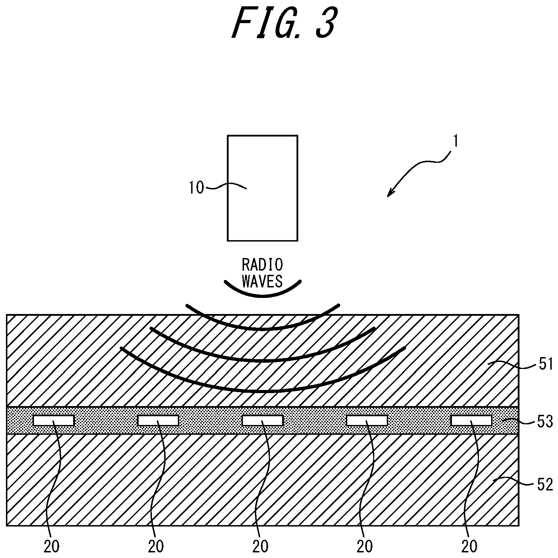

As described above, the debonding methods according to the comparative examples result in increased waste of heat energy or the solvent and poor debonding efficiency. The present disclosure describes a debonding system 1 and a debonding apparatus 20 (see FIGS. 2 and 3 and the like), and a debonding method that can debond an adhesive member with high efficiency.

### (Example of Configuration of Debonding System 1)

As illustrated in FIG. 2, the debonding system 1 according to the present disclosure includes a terminal apparatus 10 and a debonding apparatus 20. The terminal apparatus 10 includes a terminal controller 11, a communication antenna 12, a powering antenna 13, and a display 14. The debonding apparatus 20 includes a debonding controller 21, a communication antenna 22, a powering antenna 23, a memory 24, a battery 25, and a debonder 26.

The terminal controller 11 and the debonding controller 21 may be configured with, for example, a processor such as a central processing unit (CPU) or a dedicated circuit such as a field programmable gate array (FPGA). The terminal controller 11 and the debonding controller 21 may be configured to execute programs that achieve various functions of the debonding system 1. The terminal controller 11 or the debonding controller 21 may be simply referred to as a controller.

The terminal controller 11 or the debonding controller 21 may be provided with storage. The storage may store various information used for the operation of the terminal controller 11 or the debonding controller 21, a program to achieve the functions of the terminal controller 11 or the debonding controller 21, or the like. The storage may function as a work memory of the terminal controller 11 or the debonding controller 21. The storage may be configured with a semiconductor memory, for example. The storage may be configured separately from the terminal controller 11 or the debonding controller 21. The functions of the storage of the debonding controller 21 may be achieved by the memory 24 described later. The terminal controller 11 or the debonding controller 21 may be equipped with a clock or timer to recognize the time, and may be synchronized by the time.

The communication antennas 12 and 22 are configured to be able to transmit and receive radio waves at a communication frequency between the terminal apparatus 10 and the debonding apparatus 20. When information or data is output from the terminal apparatus 10 to the debonding apparatus 20, the terminal controller 11 transmits, from the communication antenna 12, radio waves into which an electric signal corresponding to the information or data to be output to the debonding controller 21 is modulated. The debonding controller 21 demodulates the radio waves received by the communication antenna 22 to acquire the electric signal corresponding to the information or data from the terminal controller 11. Conversely, when information or data is output from the debonding apparatus 20 to the terminal apparatus 10, the debonding controller 21 transmits, from the communication antenna 22, radio waves into which an electric signal corresponding to the information or data to be output to the terminal controller 11 is modulated. The terminal controller 11 demodulates the radio waves received by the communication antenna 12 to acquire the electric signal corresponding to the information or data from the debonding controller 21. In this example, communication by radio waves is described, but communication by light may also be performed.

The terminal controller 11 and the debonding controller 21 may be configured with communication devices to enable communication via the communication antennas 12 and 22. The communication devices may be devices based on a communication standard, such as a local area network (LAN) or Bluetooth^{®} (Bluetooth is a registered trademark in Japan, other countries, or both). The communication devices may be devices based on other various communication standards, not limited to these.

The powering antenna 13 is configured to be able to transmit, from the terminal apparatus 10, radio waves at a powering frequency to the debonding apparatus 20. The powering antenna 23 is configured to be able to receive, by the debonding apparatus 20, the radio waves at the powering frequency from the terminal apparatus 10. When power is supplied from the terminal apparatus 10 to the debonding apparatus 20, the terminal controller 11 transmits radio waves for powering from the powering antenna 13. The debonding controller 21 converts the energy of the radio waves received by the powering antenna 23 into electric power, and consumes the electric power by the debonding controller 21 itself. The debonding controller 21 also supplies power to the memory 24, the battery 25, or the debonder 26.

The communication frequency and the powering frequency may be set to the same value. The communication antenna 12 and the powering antenna 13 of the terminal apparatus 10 may be shared. The communication antenna 22 and the powering antenna 23 of the debonding apparatus 20 may be shared.

The debonding system 1 may not include powering antennas 13 and 23. In this case, the debonding apparatus 20 operates with electric power charged in the battery 25. The debonding system 1 may not include a battery 25. In this case, the debonding apparatus 20 operates with electric power supplied to the powering antenna 23.

The display 14 of the terminal apparatus 10 may include various types of displays such as a liquid crystal display. The terminal apparatus 10 may include an input device that accepts input from a user. The input device may include, for example, a keyboard or physical keys, or a pointing device such as a touch panel or touch sensor or a mouse. In the present disclosure, the display 14 is a touch panel integral with an input device.

The memory 24 of the debonding apparatus 20 stores information used to authenticate whether an instruction is correct when the debonding controller 21 receives, via the communication antenna 22, an instruction to operate the debonder 26. The memory 24 may be configured with, for example, a semiconductor memory. The memory 24 may be configured integrally with the debonding controller 21.

The battery 25 of the debonding apparatus 20 charges electric power that is rectified by the debonding controller 21 from radio waves for powering received by the powering antenna 23. The battery 25 supplies electric power to the debonder 26 by discharging. The battery 25 may supply electric power to the debonding controller 21 or the memory 24.

The debonder 26 of the debonding apparatus 20 is configured to be operable to debond an adhesive member 53 by acting on the adhesive member 53 (see FIG. 3 and the like). The debonder 26 starts the operation of debonding the adhesive member 53 in response to a control instruction from the debonding controller 21.

When the adhesive member 53 is made of a material that dissolves in a solvent, the debonder 26 is provided with a container that contains the solvent capable of dissolving the adhesive member 53, and an actuator to release the solvent from the container and apply the solvent to the adhesive member 53.

When the adhesive member 53 is made of a material that decomposes or expands by heating, the debonder 26 may be provided with a heat source. The heat source may include a heater. The heat source may include a material that generates heat through a chemical reaction and an actuator that initiates the chemical reaction of the heat-generating material. The heat source may include a microwave source that emits microwaves at a frequency of vibrating the molecules of the adhesive member 53. The heat source is not limited to these examples and may be configured in various aspects.

When the adhesive member 53 is made of a material that decomposes by application of light such as UV light, the debonder 26 may be provided with a light source. The light source may include a lamp, a light emitting diode (LED), a laser diode (LD), or the like.

### (Example of Operation of Debonding System 1)

As illustrated in FIG. 3, in a member in which an adhered member 51 and an adhered member 52 are adhered by the adhesive member 53, the terminal apparatus 10 is disposed outside the member. On the other hand, the debonding apparatuses 20 are arranged inside the member. The number of debonding apparatuses 20 may be one or two or more. When the member is an object to be disassembled, in the debonding system 1, radio waves are transmitted from the terminal apparatus 10, which is disposed outside the member, to remotely control the debonding apparatuses 20, which are arranged inside the member, to start debonding operation to debond the adhesive member 53, thereby facilitating disassembling the object including the adhered members 51 and 52. The number of debonding apparatuses 20 that one terminal apparatus 10 can remotely control is one or two or more. The debonding apparatuses 20 arranged inside the member may be remotely controlled by two or more terminal apparatuses 10. The combinations of the terminal apparatuses 10 and the debonding apparatuses 20 may be identified by the frequencies of radio waves used for communication.

The debonding apparatuses 20 may be arranged inside the member so as to directly contact the adhesive member 53. The debonding apparatuses 20 may be arranged at positions surrounded by the adhesive member 53. The debonding apparatuses 20 may be arranged between the adhered member 51 or 52 and the adhesive member 53. The arrangement intervals of the debonding apparatuses 20 may be determined as appropriate so that the adhesive member 53 can be debonded with high efficiency. When the debonding apparatuses 20 debond the adhesive member 53 using a solvent, the arrangement intervals of the debonding apparatuses 20 may be determined according to the amount of solvent released from the debonders 26. When the debonding apparatuses 20 debond the adhesive member 53 by heating, the arrangement intervals of the debonding apparatuses 20 may be determined according to the amount of heat generated by the debonders 26. When the debonding apparatuses 20 debond the adhesive member 53 using light, the arrangement intervals between the debonding apparatuses 20 may be determined according to the amount of light emitted by the debonders 26.

The debonding apparatuses 20 may be arranged inside the member so as not to directly contact the adhesive member 53. In a case in which the debonding apparatuses 20 are arranged so as not to directly contact the adhesive member 53, when the debonders 26 are provided with a solvent, passages through which the solvent can reach the adhesive member 53 from the debonders 26 may be provided. When the debonders 26 are provided with heat sources, a material with high thermal conductivity may be disposed between the heat sources and the adhesive member 53. When the debonders 26 are provided with light sources, a material with high light transmittance may be disposed between the light sources and the adhesive member 53.

In the debonding system 1, the terminal controller 11 of the terminal apparatus 10 accepts input of an operation instruction from the user via the touch panel of the display 14. The operation instruction may include a charging instruction for the batteries 25. The operation instruction may include a debonding instruction to activate the debonding apparatuses 20. The terminal apparatus 10 may accept input of authentication information necessary for activating the debonding apparatuses 20 or necessary for enabling the debonders 26 to be activated, as well as accepting input of a debonding instruction as an operation instruction.

Upon accepting input of the charging instruction for the batteries 25, as an operation instruction, the terminal controller 11 transmits radio waves for powering from the powering antenna 13. The debonding controllers 21 of the debonding apparatuses 20 receive the radio waves for powering at the powering antennas 23, rectify the radio waves, and charge the batteries 25.

Upon accepting input of the debonding instruction as an operation instruction, the terminal controller 11 transmits, from the communication antenna 12, radio waves for communication corresponding to the debonding instruction. The debonding controllers 21 acquire the debonding instruction by receiving the radio waves for communication corresponding to the debonding instruction at the communication antennas 22. When the debonders 26 can be activated without authentication, the debonding controllers 21 activate the debonders 26 in response to the debonding instruction and cause the debonders 26 to start debonding operation. The debonders 26 may operate using at least one of electric power discharged from the batteries 25 or electric power received by the powering antennas 23.

Upon accepting input of authentication information, the terminal controller 11 transmits, from the communication antenna 12, radio waves corresponding to the authentication information together with the radio waves corresponding to the debonding instruction. The debonding controllers 21 acquires the authentication information by receiving the radio waves corresponding to the authentication information via the communication antennas 22. When authentication is required to activate the debonders 26, the debonding controllers 21 compare the acquired authentication information with information stored in the memories 24. The debonding controllers 21 determine that authentication is successful when the acquired authentication information matches with the authentication information stored in the memories 24, enable the debonders 26 to be activated, activate the debonders 26 in response to the debonding instruction, and cause the debonders 26 to start debonding operation.

The debonding controllers 21 may compare the authentication information acquired from the terminal controller 11 with information that is stored in advance in the memories 24 as the authentication information itself. The terminal controller 11 may store, in advance in storage, information that is identical to the information stored in advance in the memories 24, and transmits the information read out from the storage to the debonding controllers 21 as the authentication information. In this case, the terminal controller 11 does not need to accept input of the authentication information.

### <Example of Procedure of Debonding Method>

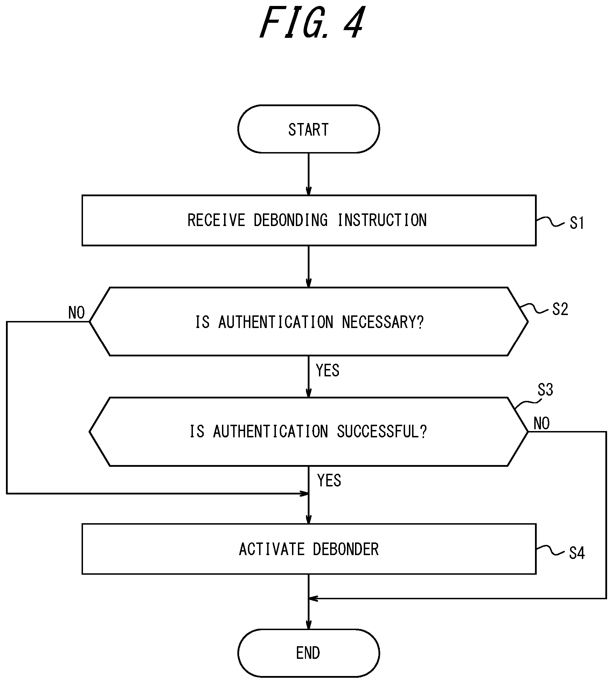

The debonding controller 21 of the debonding apparatus 20 may perform a debonding method including an example of procedure in the flowchart illustrated in FIG. 4. The debonding method may be realized as a debonding program to be executed by a processor provided in the debonding controller 21. The debonding program may be stored in a non-temporary computer readable medium.

The debonding controller 21 receives a debonding instruction from the terminal controller 11 of the terminal apparatus 10 via the communication antenna 22 (step S1). The debonding controller 21 determines whether authentication is necessary to execute the debonding instruction (step S2). When authentication is not necessary (step S2: NO), the debonding controller 21 proceeds its operation to step S4.

When authentication is necessary (step S2: YES), the debonding controller 21 performs the authentication and determines whether the authentication is successful (step S3). When the authentication is not successful (step S3: NO), i.e., when the authentication fails, the debonding controller 21 terminates the execution of the flowchart in FIG. 4 without executing the debonding instruction.

When the authentication is successful (step S3: YES) or when authentication is not necessary (step S2: NO), the debonding controller 21 enables the debonder 26 to be activated, and executes the debonding instruction to activate the debonder 26 (step S4). After executing step S4, the debonding controller 21 terminates the execution of the flowchart in FIG. 4.

### (Summary)

As described above, in the debonding system 1 according to the present disclosure, the debonding apparatuses 20 located inside the object to be disassembled are remotely controlled by the terminal apparatus 10 outside the object. This makes it possible for a solvent, heat, or light to act on the adhesive member 53 inside the object to be disassembled. As a result, the adhesive member 53 is debonded with high efficiency, and the object to be disassembled is disassembled with high efficiency.

In addition, by enabling the debonders 26 to be activated when the debonding apparatuses 20 are successfully authenticated, it is possible to avoid a situation in which the object is unintentionally disassembled. For example, unauthorized disassembly by a malicious third party can be prevented. As a result, security regarding disassembly is improved.

### (Other Embodiments)

Other embodiments will be described below.

### <Separation of Debonding Apparatus 20>

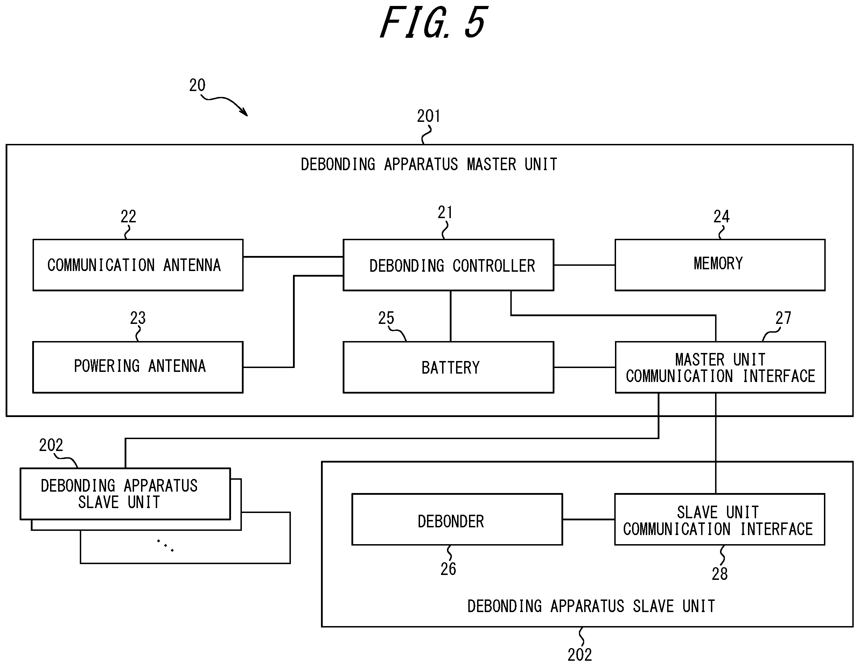

As illustrated in FIG. 5, the debonding apparatus 20 may be separated into a debonding apparatus master unit 201 and debonding apparatus slave units 202. The debonding apparatus master unit 201 includes a debonding controller 21, a communication antenna 22, a powering antenna 23, a memory 24, a battery 25, and a master unit communication interface 27. The debonding apparatus slave unit 202 includes a debonder 26 and a slave unit communication interface 28. The debonding apparatus master unit 201 is also referred to simply as a master unit. The debonding apparatus slave units 202 are also referred to simply as slave units. The number of slave units connected to one master unit may be one or two or more.

The master unit communication interface 27 and each slave unit communication interface 28 are communicably connected to each other with a wire. The master unit communication interface 27 and each slave unit communication interface 28 may be communicably connected wirelessly.

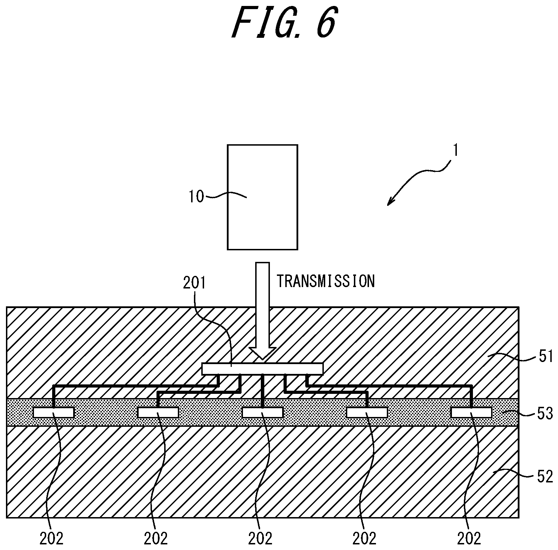

As illustrated in FIG. 6, when the debonding apparatus 20 is separated into a debonding apparatus master unit 201 and debonding apparatus slave units 202, the master unit and the slave units are arranged inside a member in which an adhered member 51 and an adhered member 52 are adhered by an adhesive member 53. The slave units may be arranged in the same manner as the debonding apparatuses 20 illustrated in FIG. 3. The slave units may be arranged inside the member so as to directly contact the adhesive member 53. The slave units may be arranged in positions surrounded by the adhesive member 53. The slave units may be arranged between the adhered member 51 or 52 and the adhesive member 53. The slave units may be arranged inside the adhesive member 53 so as not to directly contact the adhesive member 53. The master unit may be arranged inside the member so as not to directly contact the adhesive member 53, as illustrated in FIG. 6, but may also be arranged inside the adhesive member 53 or at such a position as to contact the adhesive member 53.

On the other hand, even in this case, the terminal apparatus 10 is disposed outside the member. In the debonding system 1, radio waves are transmitted from the terminal apparatus 10, which is disposed outside the member, to remotely control the master unit arranged inside the member. The master unit controls the slave units to start debonding operation at the debonders 26 to debond the adhesive member 53, thereby facilitating disassembling the adhered members 51 and 52.

As described above, by separating the debonding apparatus 20 into the master unit and the slave units, the debonding apparatus 20 can be arranged in various configurations. As a result, the convenience of the debonding system 1 is improved.

When the number of slave units increases, the debonding controller 21, communication antenna 22, powering antenna 23, memory 24, and battery 25 of the master unit are shared among the multiple slave units. As a result, the number of these components is reduced.

### <Use of Different Debonding Apparatuses 20>

When a single terminal apparatus 10 can communicate with multiple debonding apparatuses 20, the terminal apparatus 10 may be configured to enable only part of the debonding apparatuses 20 to be activated by making authentication information on the part of the debonding apparatuses 20 different from that on the other debonding apparatuses 20. In other words, the debonding apparatuses 20 may be divided into two or more groups, and authentication information specific to each group may be set. The single terminal apparatus 10 can thereby select and activate part of the multiple debonding apparatuses 20. As a result, the convenience of disassembly operation using the debonding system 1 is improved.

### <Object to Be Disassembled>

The object to be disassembled may be configured so as to be difficult to disassemble by means other than activating the debonding apparatuses 20 inside the object. When the adhesive member 53 is debonded by a solvent, the object may be configured so that the solvent cannot be applied to the adhesive member 53 from outside the object. When the adhesive member 53 is debonded by heating, the object may be configured so that the temperature of the adhesive member 53 does not rise even when the object is heated from outside, for example, so that the adhesive member 53 is surrounded by a heat insulating member. In other words, by protecting the adhesive member 53 from debonding means from outside the object, the means for disassembling the object may be limited to activating the debonding apparatuses 20. By limiting the means for disassembling the object to activating the debonding apparatuses 20, it is possible to avoid a situation in which the object is unintentionally disassembled. For example, unauthorized disassembly by a malicious third party can be prevented. As a result, security regarding disassembly is improved.

By protecting the adhesive member 53 from the solvent or heat from outside the object, the object is protected from unintended damage caused by an increase in the ambient temperature of the object or by solvents present in the environment of the object.

The object to be disassembled may be at least part of a large facility or equipment. In this case, it is difficult to debond the internal adhesive member 53 from the outside. Using the debonding system 1 according to the present disclosure improves the convenience of disassembly operation for the object in which it is difficult to debond the adhesive member 53 from the outside.

### <Other Example of Authentication Information>

A one-time password that changes according to the time may be used as authentication information. When a one-time password is used as authentication information, the debonding controller 21 generates a one-time password according to the time that can be confirmed by a clock or timer, based on a rule or algorithm for generating one-time passwords, and compares the one-time password with authentication information obtained from the terminal controller 11. The debonding system 1 may further include a device that notifies the user of the one-time password. The terminal apparatus 10 may generate a one-time password and transmit the one-time password to the debonding controllers 21 as authentication information. In this case, the terminal controller 11 does not need to accept input of the one-time password as authentication information.

The above description of the embodiment related to the present disclosure has been provided with reference to the accompanying drawings, but the specific configuration is not limited to this embodiment, and various modifications within the scope of the present disclosure are also included.

## Claims

1. A debonding apparatus (20) comprising:
at least one debonder (26) and a controller (21) that are located inside an object including multiple adhered members (51, 52) adhered by an adhesive member (53),
wherein
the debonder (26) is configured to be operatable to debond the adhesive member (53) by acting on the adhesive member (53), and
the controller (21) is configured to activate the debonder (26), based on a debonding instruction received from a terminal apparatus (10) located outside the object.

2. The debonding apparatus (20) according to claim 1, wherein the debonder (26) includes a container containing a solvent that can dissolve the adhesive member (53), and an actuator configured to cause the solvent to be released from the container.

3. The debonding apparatus (20) according to claim 1 or 2, wherein the debonder (26) includes a heat source configured to apply heat to the adhesive member (53).

4. The debonding apparatus (20) according to any one of claims 1 to 3, wherein the debonder (26) includes a light source configured to apply light to the adhesive member (53).

5. The debonding apparatus (20) according to any one of claims 1 to 4, wherein the controller (21) is configured to receive authentication information from the terminal apparatus (10), and enable the debonder (26) to be activated upon succeeding in authentication using the authentication information.

6. The debonding apparatus (20) according to claim 5, comprising a memory (24),
wherein the controller (21) is configured to determine that the authentication using the authentication information is successful when information stored in advance in the memory (24) matches with the authentication information.

7. The debonding apparatus (20) according to any one of claims 1 to 6, separated into a master unit (201) including the controller (21), and at least one slave unit (202) including the debonder (26).

8. A debonding system (1) comprising:
at least one debonding apparatus (20); and
a terminal apparatus (10) configured to wirelessly power the at least one bonding apparatus (20) and transmit a debonding instruction to the at least one debonding apparatus (20),
wherein
the debonding apparatus (20) includes at least one debonder (26) and a controller (21) that are located inside an object including multiple adhered members (51, 52) adhered by an adhesive member (53),
the debonder (26) is configured to be operatable to debond the adhesive member (53) by acting on the adhesive member (53), and
the controller (21) is configured to activate the debonder (26), based on the debonding instruction received wirelessly from the terminal apparatus (10) located outside the object.

9. The debonding system (1) according to claim 8, wherein
the terminal apparatus (10) is configured to transmit authentication information to multiple debonding apparatuses (20),
the controller (21) is configured to enable the debonder (26) to be activated upon succeeding in authentication using the authentication information, and
the authentication information is information that enables only part of the multiple debonding apparatuses (20) to be successfully authenticated.

10. A debonding method comprising:
activating a debonder (26) based on a debonding instruction received from a terminal apparatus (10), the debonder (26) being located inside an object including multiple adhered members (51, 52) adhered by an adhesive member (53), and configured to be operatable to debond the adhesive member (53) by acting on the adhesive member (53), the terminal apparatus (10) being located outside the object.

11. The debonding method according to claim 10, wherein the activating the debonder (26) includes receiving authentication information
from the terminal apparatus (10), and activating the debonder (26) upon succeeding in authentication using the authentication information.
